Europäisches Patentamt

European Patent Office

Office européen des brevets

(19)

(11) **EP 0 885 172 B1**

(12) **FASCICULE DE BREVET EUROPEEN**

(45) Date de publication et mention
de la délivrance du brevet:
**07.06.2000 Bulletin 2000/23**

(51) Int Cl.[7]: **C02F 3/04**, C02F 3/06,
B01J 8/04

(21) Numéro de dépôt: **97906799.8**

(22) Date de dépôt: **07.03.1997**

(86) Numéro de dépôt international:
**PCT/CA97/00165**

(87) Numéro de publication internationale:
**WO 97/32819 (12.09.1997 Gazette 1997/39)**

(54) **Méthode pour le traitement d'un liquide dans un réacteur à lits fixes capillaires**

Methode zur Flüssigkeitsbehandlung mittels eines Reaktors mit kapillaren Festbetten

Method for the treatment of a liquid in a capillary fixed-bed reactor

(84) Etats contractants désignés:
**GB NL SE**

(30) Priorité: **07.03.1996 CA 2171279**

(43) Date de publication de la demande:
**23.12.1998 Bulletin 1998/52**

(73) Titulaire: **TEXEL INC.**
**Québec GOS 2JO (CA)**

(72) Inventeurs:
• **AUGER, Richard**
**St.-Elzéar, Québec G0S 2J0 (CA)**

• **DROUIN, Bernard**
**Cap Rouge, Québec G1Y 1B4 (CA)**

(74) Mandataire: **Peuscet, Jacques**
**SCP Cabinet Peuscet et Autres,**
**78, avenue Raymond Poincaré**
**75116 Paris (FR)**

(56) Documents cités:
**WO-A-95/21691**   **DE-A- 2 550 818**
**DE-A- 4 022 552**   **US-A- 4 199 607**

**Description**

## DOMAINE DE L'INVENTION

La présente invention concerne une méthode pour le traitement d'un liquide dans un réacteur.

## DESCRIPTION DE L'ART ANTÉRIEUR

Par "réacteur", on entend une enceinte dans laquelle une réaction entre divers composants a lieu. De cette manière, de nouvelles substances utiles sont créées, ou encore, des substances nuisibles perdent dans cette réaction leur caractère nuisible.

Dans l'industrie, beaucoup de procédés font appel à l'utilisation de réacteurs. Les applications sont nombreuses et des domaines aussi variés que le traitement des eaux, la pétrochimie, l'industrie pharmaceutique et l'industrie agro-alimentaire les utilisent.

Il existe divers types de réacteurs. Toutefois, on distingue normalement les deux types suivants: les réacteurs en lot et les réacteurs en continu.

WO-A-95 21691 divulgue la mise en oeuvre d'une réaction catalytique gaz-liquide à contre-courant dans un réacteur en continu. Le réacteur comprend une enceinte pourvue d'une partie supérieure, où il est alimenté en liquide, et d'une partie inférieure entre lesquelles se trouve disposé un lit absorbant, capable d'absorber par capillarité le liquide introduit dans l'enceinte, dans lequel le liquide se trouve traiter. Dans l'enceinte sont disposés des éléments séparateurs en vue de diviser horizontalement le lit absorbant.

Le choix d'un réacteur s'établit en fonction des débits à traiter, de la cinétique de la réaction, de la nature des réactifs et des conditions de réaction.

Pour un réacteur en lot, une des caractéristiques importantes est le temps de résidence moyen. Un volume de liquide à être traité est introduit dans le réacteur. Lors du traitement, ce volume de liquide peut réagir avec des réactifs ou des catalyseurs. Le liquide est ainsi traité pour une période de temps donné. Le temps de résidence est le temps de traitement, i.e. le temps où le liquide peut réagir avec les réactifs ou le catalyseur, est déterminé en fonction du résultat désiré. Lorsque le résultat désiré est atteint, le liquide traité est évacué du réacteur pour faire place à un nouveau volume de liquide devant être traité.

Avec le réacteur en lot, divers paramètres peuvent être ajustés pour obtenir le traitement désiré. Parmi ces paramètres, le temps de traitement du liquide dans le réacteur est le plus facilement contrôlé. D'ordinaire, le liquide à traiter dans le réacteur en lot est maintenu en contact avec une résine ou un réactif grâce à une agitation, un barbotement ou une aération permettant de maintenir en suspension la résine ou le réactif uniformément dans tout le liquide.

Les réacteurs en lot sont généralement pourvus d'une valve de sortie permettant de fermer ou d'ouvrir la sortie pour évacuer le liquide car il n'existe présentement aucun réacteur utilisant la capillarité pour retenir le liquide dans une garniture poreuse.

## OBJET ET DESCRIPTION DE L'INVENTION

La présente invention a pour objet une méthode pour le traitement d'un liquide dans un réacteur de structure donnée.

Plus précisément, le réacteur comprend une enceinte, une entrée, une sortie, un lit absorbant et au moins un élément séparateur.

L'enceinte est pourvue d'une partie supérieure et d'une partie inférieure.

L'entrée est disposée dans la partie supérieure de l'enceinte pour introduire à intervalle régulier dans l'enceinte un volume donné de liquide à traiter.

La sortie est disposée dans la partie inférieure de l'enceinte pour évacuer de celle-ci le liquide traité.

Le lit absorbant est disposé dans l'enceinte entre les parties supérieure et inférieure. Le lit est constitué d'une garniture poreuse capable d'absorber et de retenir par capillarité le liquide introduit dans l'enceinte en vue de le traiter. La garniture poreuse peut être réactive ou non-réactive.

Un ou des éléments séparateurs sont disposés horizontalement dans l'enceinte en vue de diviser le lit absorbant en au moins deux couches superposées d'une hauteur déterminée. Cette hauteur est calculée en fonction de la hauteur de la remontée capillaire du liquide à traiter dans une colonne remplie d'une couche continue du même lit absorbant. Les séparateurs sont faits en un matériau choisi de façon à être perméable au liquide à traiter mais de façon à causer aussi au moins un bris de capillarité dans l'enceinte.

L'invention vise donc plus précisément une méthode pour le traitement d'un liquide dans un réacteur comprenant une enceinte pourvue d'une partie supérieure et d'une partie inférieure entre lesquelles se trouve disposé un lit absorbant dans lequel le liquide se trouve traiter. Cette méthode comprend:

- l'introduction à intervalle régulier d'un volume donné de liquide à traiter dans l'enceinte au niveau de la partie supérieure de celle-ci; et
- l'évacuation du liquide traité hors de l'enceinte au niveau de la partie inférieure de celle-ci.

Elle est caractérisée en ce que:

- on utilise comme lit absorbant une garniture poreuse capable d'absorber par capillarité le liquide introduit dans l'enceinte en vue de le traiter, ladite garniture ayant une hauteur de remontée capillaire prédéterminée $h_s$ qui est la hauteur à laquelle remonte le liquide à traiter par effet de capillarité lorsqu'il est introduit dans un tube rempli d'une couche constitué de ladite garniture; et
- on dispose dans l'enceinte au moins un élément séparateur en vue de diviser horizontalement le lit absorbant en au moins deux couches superposées d'une même hauteur donnée qui est égale ou inférieure à la hauteur de remontée capillaire $h_s$ de la garniture poreuse, le ou lesdits séparateur(s) étant choisi(s) de façon à être perméables au liquide à traiter tout en causant au moins un bris de capillarité dans l'enceinte.

Avec la présente invention, le temps de résidence ou de traitement est aussi long que voulu et facilement contrôlable. En fait, il correspond au temps écoulé entre deux introductions successives de liquide.

Le réacteur utilisé exploite la capillarité d'un abosrbant envers un liquide. Ainsi, le liquide demeure à l'intérieur de l'enceinte tant et aussi longtemps que d'autre liquide n'y soit pas introduit. Ainsi, lorsque l'intervalle entre deux introductions successives de liquide est relativement long par rapport au temps de remplissage du réacteur, ce dernier fonctionne selon le principe d'un réacteur en lot. Lorsque l'intervalle est relativement court, il fonctionne alors comme un réacteur en continu. Il est aussi possible d'utiliser le réacteur selon un mode d'opération séquentiel.

Grâce aux séparateurs divisant le lit absorbant, le réacteur peut être utilisé à un rendement maximum car ces séparateurs limitent la hauteur de chaque lit à la hauteur maximum à laquelle la matière absorbante peut retenir par capillarité le liquide éliminant ainsi toute partie inutilisée (aussi appelé "espace mort") de l'enceinte. Dans le cas où plusieurs séparateurs sont utilisés pour diviser le lit absorbant en couches, ces couches peuvent être remplies successivement. Dans un tel cas, le réacteur fonctionne alors comme plusieurs réacteurs fonctionnant en séquence.

Afin de maximiser le rendement du réacteur pour un traitement désiré, plusieurs types de garnitures poreuses différentes, réactives ou non, séparées par les séparateurs, peuvent être utilisés.

Lorsque la présence d'une phase immobilisée est requise, le réacteur est particulièrement avantagé avec sa garniture poreuse réactive. Lorsque les vitesses de réaction sont lentes, le réacteur permet d'ajuster le temps de résidence afin de permettre le traitement désiré. Enfin, le réacteur tel que décrit est peu coûteux à construire et est ainsi avantagé lorsque les coûts de construction du réacteur doivent être minimisés.

Dans l'art antérieur, il n'était pas évident d'exploiter un réacteur opérant par capillarité dû à leur faible rendement. Le réacteur utilisé dans la méthode selon la présente invention, permet grâce à ses séparateurs d'augmenter le rendement du réacteur à un niveau optimal.

## BRÈVE DESCRIPTION DES FIGURES

L'invention sera mieux comprise à la lecture de la description non limitative qui va suivre des modes de réalisation préférés de celle-ci, faite en se référant aux dessins annexés dans lesquels:

- la figure 1 est une vue schématique d'un réacteur utilisé selon un mode de réalisation préféré de l'invention;

- la figure 2 est une vue schématique d'une colonne remplie d'une garniture retenant un liquide par capillarité sur une hauteur $h_s$;

- la figure 3 est une vue semblable à celle de la figure 2, illustrant l'effet des bris de capillarité;

- la figure 4 est un graphique illustrant la distribution de la masse d'eau retenue par capillarité dans une colonne continue et une colonne segmentée; et

- la figure 5 est une représentation schématique du réacteur utilisé pour fin de comparaison avec un réacteur en lot conventionnel.

Dans le but de simplicité, les mêmes numéros de référence ont été utilisés pour identifier les mêmes pièces dans la description qui suit et les dessins annexés.

## DESCRIPTION D'UN MODE DE RÉALISATION PRÉFÉRÉ DE L'INVENTION

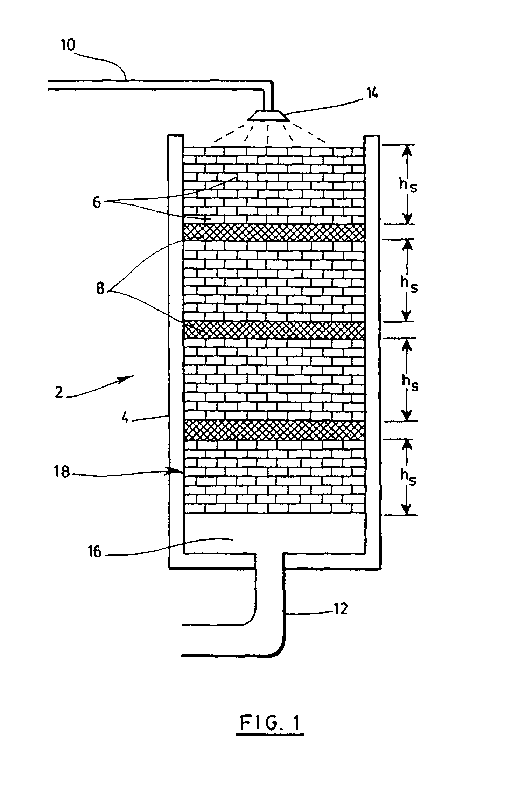

Un réacteur (2) utilisable pour mettre en oeuvre la méthode selon l'invention est illustré à la figure 1. Le réacteur (2) comprend une enceinte (4) ayant une partie supérieure et une partie inférieure, une entrée (10), une sortie (12), un lit absorbant (6) et trois séparateurs (8) formant quatre segments.

L'enceinte (4) est pourvue à sa partie supérieure d'une entrée (10) pour y introduire à intervale régulier un volume donné de liquide à traiter. L'entrée (10) est pourvue d'une buse de distribution (14) pour distribuer uniformément le liquide à traiter dans la partie supérieure de l'enceinte. Une sortie est disposée dans la partie inférieure de l'enceinte (4) pour évacuer le liquide traité de celle-ci.

Les trois séparateurs (8) sont constitués de préférence d'une grille pouvant être constituée de plastique, de métal ou de résine et plus spécifiquement de chlorure de polyvinyl (CPV). La grille est pourvue de mailles définissant des ouvertures suffisamment petites pour diviser le lit absorbant et suffisamment grande pour créer un bris de contact hydraulique causant ainsi le bris de capillarité recherché. Les séparateurs divisent le lit absorbant (6) en quatre couches (18) superposées de hauteur $h_s$ chacune. Le lit absorbant est constitué d'une garniture poreuse. Le lit peut être dit "homogène" i.e. lorsque la garniture poreuse est constituée d'un seul morceau, ou hétérogène i.e. lorsque la garniture poreuse est constituée de plusieurs morceaux. Il est à noter que lorsque la garniture est hétérogène, la capillarité n'est pas seulement orientée dans un axe vertical, mais dans toutes les directions. Dans un tel cas, le liquide est capable lors de son introduction de voyager d'un morceau à l'autre, à l'intérieur de ces derniers, et ce, sans ruisseler entre les morceaux. Il est alors possible d'introduire par une autre entrée située de préférence dans la partie supérieure de l'enceinte un gaz tel de l'air et de le faire circuler de manière indépendante entre les morceaux.

La garniture poreuse réactive peut être couplée à un catalyseur, à des protéines, à des micro-organismes ou à un réactif possédant une activité envers au moins un des constituants de la solution à traiter. De préférence, elle est faite de fibres métalliques recouvertes d'un catalyseur tel par exemple le nickel ou le platine, de charbon activé, de zéolites, de non-tissé pourvus de bactéries immobilisées dans leur structure, de gels de polyacrylamide ou d'alginate contenant des enzymes ou des anticorps et de fibres naturelles ou synthétiques ayant des anticorps greffés à leurs surface.

La garniture poreuse non-réactive est faite de préférence de mousse de polyuréthanne, de mousse de polypropylène, de fibre de verre, de tourbe, de pierre volcanique, de papier, de céramique poreuse, de tissus de fibres naturelles ou synthétiques et de non-tissés de fibres synthétiques.

Dans le mode de réalisation préférentiel illustré à la figure 1, le réacteur (2) comprend aussi un bassin de décantation (16). On comprendra toutefois que le bassin de décantation (16) ainsi que la buse de distribution (14) sont des caractéristiques préférées mais non-essentielles du réacteur (2).

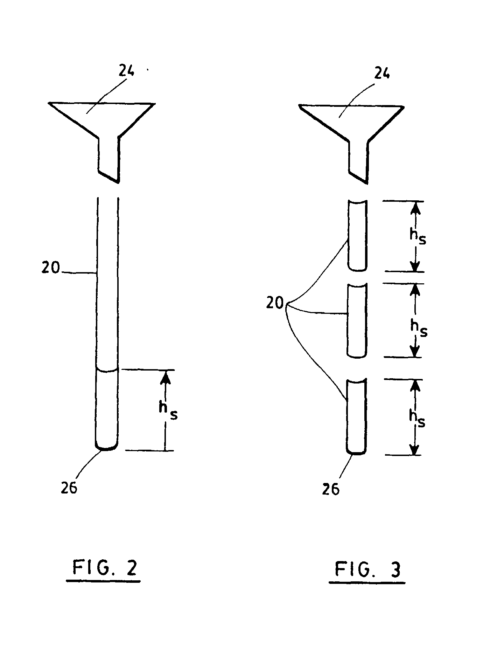

Les figures 2 et 3 illustrent l'effet de la capillarité ainsi que l'effet des séparateurs sur la capillarité. À la figure 2, un tube capillaire (i.e. un tube de verre d'un diamètre de 1 mm)(20) comprenant une entrée supérieure (24) et une sortie inférieure (26), est remplie d'un liquide comme par exemple de l'eau. Afin de déterminer la hauteur $h_s$ de la remontée capillaire i.e. la hauteur jusqu'à laquelle le liquide est retenu, un volume de liquide est introduit dans l'entrée supérieure (24) et à l'arrêt de tout écoulement, une certaine quantité de liquide est retenue. La distance entre la partie inférieure et le partie supérieure de cette colonne de liquide est la remontée capillaire $h_s$. Le volume de cette quantité de liquide est le volume retenu $V_r$.

Le liquide ne remplit complètement le tube capillaire que si la hauteur du tube (20) n'excède pas $h_s$. En fait, tel qu'illustré à la Fig. 2, seule une partie correspondante à la hauteur $h_s$ est utilisée. La figure 3 illustre trois tubes capillaires (20) de hauteurs $h_s$ discontinues superposées. Pour ce faire et ainsi utiliser au maximum le tube capillaire (20), la capillarité doit être brisée. Le bris de capillarité est réalisé dans cet exemple par la segmentation, et dans le réacteur de la présente invention, par les séparateurs assurant un bris capillaire.

La segmentation de la colonne, tout comme dans l'exemple du tube capillaire, permet aux forces capillaires de supplanter la force gravitationnelle qui s'exerce sur la colonne d'eau plus petite puisque segmentée. De cette manière l'ensemble de la garniture absorbante de la colonne est mise à contribution, alors que sans séparateurs, seule la portion inférieure est utilisée.

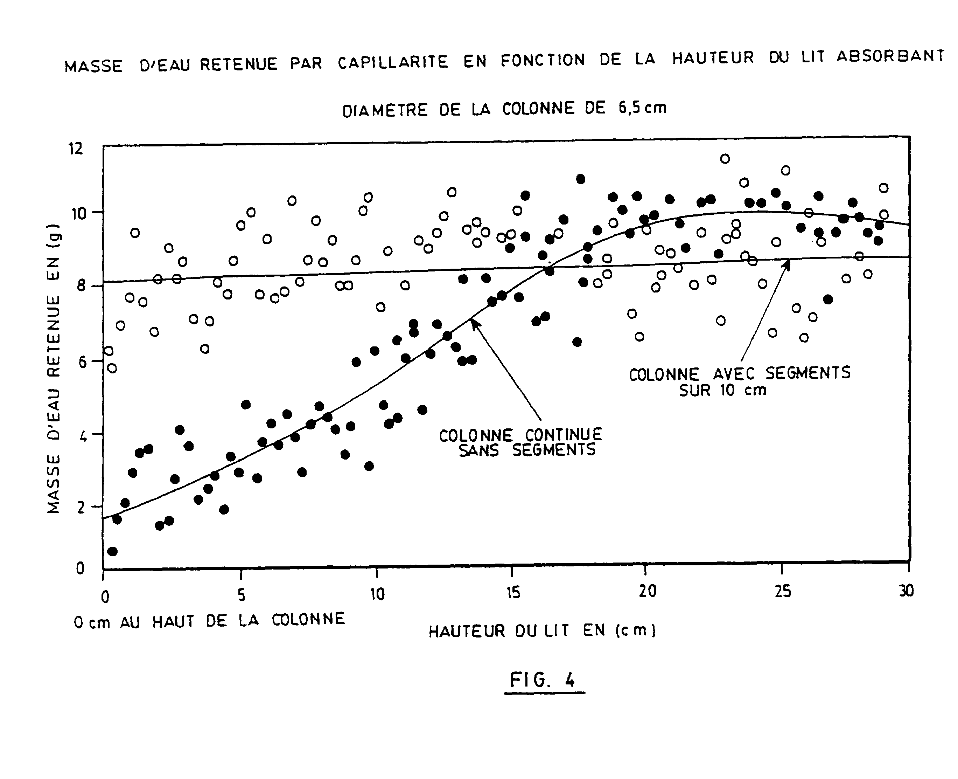

Le graphique de la Fig. 4 illustre deux distributions de masse d'eau retenue par capillarité en fonction de la hauteur du lit: une distribution pour une colonne continue et une autre pour une colonne segmentée, les deux colonnes étant autrement en tout points identiques. Sur ce graphique, la hauteur du lit est reportée en abscisse et calculée à partir du haut de la colonne.

Selon la Fig. 4, il est évident que pour une colonne segmentée à tout les 10 cm, la distribution de la masse de liquide retenu est constante sur toute la longueur, et ce, parce que la hauteur du segment de la colonne n'excède pas la hauteur $h_s$ de la remontée capillaire.

Dans le cas d'une colonne continue, le bas de la colonne retiendra une masse maximale de liquide alors que le haut de la colonne en retiendra moins.

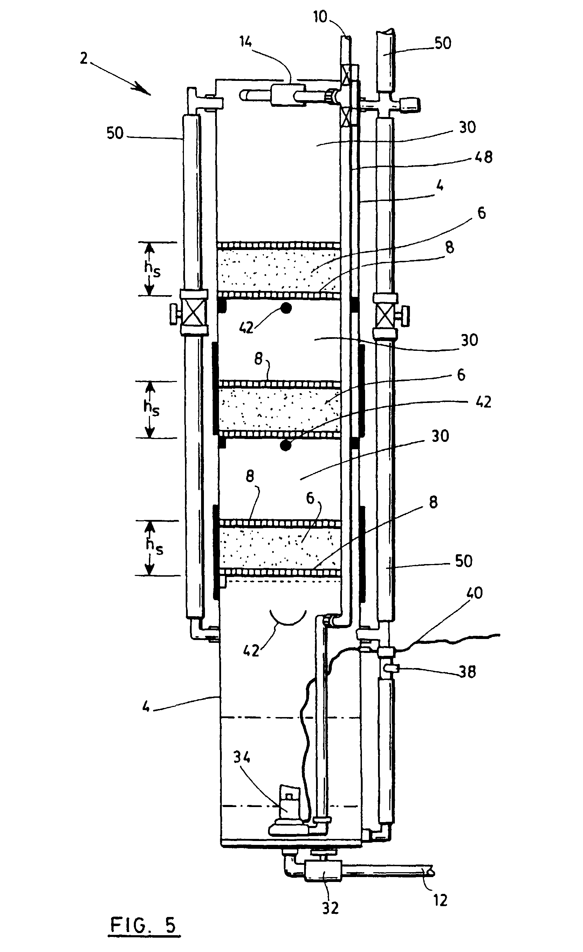

Le réacteur (2) de la figure 5 a été construit selon des critères de capacité et de dimension spécifiques mentionnés dans l'exemple qui est décrit plus loin dans la présente demande. Le liquide à traiter est acheminé à l'entrée (10) du réacteur et y est distribue par la buse de distribution (14). Le liquide passe au travers des séparateurs (8) pour imbiber et saturer la garniture poreuse du lit absorbant (6). Le réacteur comprend trois espace-morts (30) séparant le lit absorbant (6) en trois couches. Ces espace-morts (30) résultent du fait que l'enceinte (4) du réacteur (2) n'a pas été spécialement construite pour la capacité désirée mais est celle d'un ancien réacteur conventionnel existant. Sous chacune des couches de garnitures poreuses (6), le réacteur est pourvu d'une vanne d'échantillonnage (42) permettant de prélever des échantillons de liquide pour évaluer le traitement. Après avoir été traité, le liquide est évacué de l'enceinte par la sortie (12) pourvue d'une vanne de vidange (32). Cette vanne de vidange est toutefois optionnelle puisque avec le réacteur utilisé dans la méthode selon la présente invention, les phénomènes de capillarité permettent de retenir de manière passive les volumes à traiter.

Le réacteur de la figure 5 comprend aussi un système de ventilation (50) muni d'un trop-plein (38), une pompe de recirculation (34) à alimentation électrique (40) branchée, de préférence, à une minuterie, et une conduite de refoulement (48).

En pratique, le réacteur utilisable pour mettre en oeuvre la méthode selon l'invention illustré sur la figure 5 a été construit en fonction de caractéristiques physiques désirés telles un volume D donné de liquide à traiter, un temps de résidence $t_{res}$ requis pour obtenir le traitement voulu, un temps $t_{inj}$ nécessaire au chargement du réacteur, de la surface S du réacteur ou de la hauteur $h_s$ de la remontée capillaire pour une garniture donnée de lit absorbant, de la densité $d_1$ du liquide à traiter et du rapport R de la masse du lit absorbant saturé de liquide à traiter à la masse de ce même lit sec. Le rapport R est une caractéristique propre à chaque garniture de lit absorbant qui est mesurée sur un échantillon de lit absorbant de hauteur inférieure à $h_s$ et présentant la densité apparente à sec $d_{app}$.

Tel que précédemment indiqué, chaque lit absorbant possède ses propres caractéristiques i.e. $d_{app}$, R et $h_s$. Si ces caractéristiques ne sont pas connues pour un lit absorbant particulier, il est possible de les obtenir expérimentalement au préalable.

Afin de déterminer R, on peut dans un colonne semblable à celle de la Fig. 2 déterminer la masse du lit sec $m_o$ qui occupe une faible hauteur $h_i$ très inférieure à la hauteur $h_s$ présumée. On mesure la masse $m_1$ du lit après saturation avec le liquide à traiter. Ainsi on peut déterminer le rapport R selon l'équation:

$$R = \frac{m_1}{m_o} \tag{1}$$

dans laquelle $m_1$ et $m_o$ sont définis comme précédemment.

La densité $d_{app}$ peut être calculée connaissant la masse du lit sec et son volume selon l'équation:

$$d_{app} = \frac{m_o}{s.h_i} \tag{2}$$

dans laquelle s est la surface de la colonne utilisée, $h_i$, $m_o$ et $d_{app}$ sont définis comme précédemment.

La hauteur $h_s$ est déterminée selon l'équation:

$$h_s = \frac{\dfrac{m_1}{s.d_{app}} - h_i}{(R-1)} \tag{3}$$

dans laquelle $h_s$, $m_1$, s, $d_{app}$, R et $h_i$ sont définis comme précédemment. Il est à noter que les valeurs de R, $d_{app}$ et $h_s$ sont intrinsèques au lit absorbant et donc distinct du réacteur.

Le nombre d'injection $n_{inj}$ pendant un temps de traitement $t_d$ d'un volume D est calculé selon l'équation:

$$n_{inj} = \frac{t_d}{(t_{res} + t_{inj})} \tag{4}$$

dans laquelle $n_{inj}$, $t_d$, $t_{res}$ et $t_{inj}$ sont définis comme précédemment.

Le volume $V_r$ de liquide contenu dans le réacteur est calculé selon l'équation:

$$V_r = \frac{D}{n_{inj}} \tag{5}$$

dans laquelle $V_r$, D et $n_{inj}$ sont définis comme précédemment.

Connaissant le volume $V_r$ de liquide contenu dans le réacteur, le volume V de lit absorbant nécessaire dans le réacteur afin d'absorber le volume $V_r$ de liquide à traiter est calculé selon l'équation:

$$V = \frac{V_r.d_l}{(R-1).d_{app}} \tag{6}$$

dans laquelle $d_l$ est la densité du liquide à traiter, V, $V_r$, R et $d_{app}$ sont définis comme précédemment.

La masse M de lit absorbant nécessaire au réacteur est calculée selon l'équation:

$$M = V. d_{app} \tag{7}$$

dans laquelle M, V et $d_{app}$ sont définis comme précédemment.

Suivant que soit spécifiée la surface S ou la hauteur $h_t$ pour un réacteur de construction voulu, l'autre variable est calculée selon l'équation:

$$S = \frac{V}{h_t} \tag{8}$$

ou

$$h_t = \frac{V}{S} \tag{9}$$

dans laquelle S, V et $h_t$ sont définis comme précédemment.

Enfin, le nombre $n_s$ de séparateurs requis est calculé selon l'équation:

$$n_s = \frac{h_t}{h_s} - 1 \tag{10}$$

dans laquelle $n_s$, $h_t$ et $h_s$ sont définis comme précédemment et où le nombre $n_s$ est arrondi à l'entier supérieur immédiat.

EXEMPLE

On a construit le réacteur illustré à la figure 5 pour le traitement des eaux usées domestiques ayant les caractéristiques suivantes désirées:

- volume D d'eau usée à traiter:          0,627 m³;
- temps de résidence $t_{res}$:          28 minutes;
- temps $t_{inj}$ nécessaire au chargement du réacteur:          0 minute (négligeable);
- hauteur $h_t$ du lit absorbant:          0,3 mètre;
- temps de traitement $t_d$ du volume D:          1440 minutes (24 heures)
- densité $d_l$ des eaux usées:          1000 kg/m³
- garniture poreuse choisie:          copeau de non-tissé de polyester de dimension de 2,5 X 2,5 X 6 mm, saturé de résine d'acrylique;
- hauteur $h_s$ de la remontée capillaire:          0,112 mètre;
- rapport R (masse du lit saturé/sec:          4,52;
- densité $d_{app}$ du lit sec:          150 kg/m³;

En remplaçant les valeurs des variables ci-dessus dans les équations 4 à 8 et 10, on obtient:

$$n_{inj} = \frac{t_d}{(t_{res} + t_{inj})} = \frac{1440}{(28+0)} = 52 \qquad (4')$$

$$V_r = \frac{D}{n_{inj}} = \frac{0,627}{52} = 0,012\,m^3 \qquad (5')$$

$$V = \frac{V_r \cdot d_l}{(R-1) \cdot d_{app}} = \frac{0,012 \cdot 1000}{(4,52-1) \cdot 150} = 0,23\,m^3 \qquad (6')$$

$$M = V \cdot d_{app} = 0,023 \cdot 150 = 2,45\,kg \qquad (7')$$

$$S = \frac{V}{h_t} = \frac{0,023}{0,3} = 0,077\,m^2 \qquad (8')$$

$$n_s = \frac{h_t}{h_s} - 1 = \frac{0,3}{0,112} - 1 \cong 2 \qquad (10')$$

Le réacteur construit possédait donc un volume de lit absorbant de 0,023 m$^3$, ce qui lui permet de retenir 0,012 m$^3$ de liquide, et une surface de 0,077 m$^2$. Il comprenait 2 séparateurs divisant le lit absorbant en trois couches de 0,1 mètre chacune pour une hauteur totale de 0,3 mètre sachant que l'épaisseur des séparateurs est négligeable.

Les eaux usées ont été traitées pendant 28 minutes dans le réacteur. Ainsi pour un fonctionnement sans arrêt de 24 heures par jour, le réacteur a été rempli 52 fois par jour, et ce, considérant que le temps de chargement du réacteur est négligeable ($t_{inj}$= 0 minute).

Le tableau ci-dessous présente des dosages comparatifs de différents paramètres reliés à la pureté des eaux usées. À des fins de comparaisons, la garniture occupait dans le réacteur conventionnel un volume trois fois plus grand que dans le réacteur utilisé dans la méthode selon la présente invention. Les surfaces sont identiques dans chacun des réacteurs i.e. le réacteur conventionnel à percolation et le réacteur de la présente invention tel qu'illustré à la figure 5. Le réacteur utilisé dans la méthode selon la présente invention comprenait un lit absorbant divisé en trois couches (ou niveaux), une mesure a été effectuée après chacun des niveaux, le niveau 3 étant la sortie du réacteur.

| Paramètre | Fosse Septique | Réacteur conventionnel à percolation 200 L/m$^2$/jr | Réacteur utilisé selon l'invention tel qu'illustré à la figure 5 1800 L/m$^2$/jr | | |
|---|---|---|---|---|---|
| | Effluent | Effluent | Niveau 1 | Niveau 2 | Niveau 3 |
| DBO$_5$ | 110 | <5 | 6 | 5 | <5 |
| DBO$_5$-sol. | - | - | <5 | <5 | <5 |
| DCO | 245 | 23 | 238 | 39 | 34 |
| MES | 35 | 3 | 5 | 5 | <2 |
| NTK | 27.9 | <0.5 | 37.2 | 24.3 | 14.4 |
| NO$_2$-NO$_3$ | 0.86 | 50.6 | 0.64 | 13.3 | 19.6 |
| colis fécaux | 29000 | 290 | 6900 | 1500 | 360 |

On remarquera l'effet de filtration de chacun des niveaux du réacteur utilisé dans la méthode selon la présente invention par la réduction marquée de la valeur des colis fécaux. On remarquera aussi qu'aucuns des différents paramètres mesurés, sauf pour les composés azotés d'importances secondaires, ne démontrent une différence significative entre les valeurs obtenus du réacteur conventionnel à percolation et celles du réacteur de la présente invention au niveau de la sortie (niveau 3). Dans le cas des deux réacteurs, la qualité du traitement des eaux est excellente. Afin d'apprécier encore plus l'efficacité du réacteur utilisé dans la méthode selon la présente invention, des mesures effectuées sur l'effluent d'une fosse septique ont aussi été effectuées et sont rapportées. Le réacteur selon l'invention est beaucoup plus efficace qu'une simple fosse septique.

La supériorité du réacteur utilisable pour mettre en oeuvre la méthode selon l'invention réside en particulier dans le volume d'eau usée que ce dernier peut traiter par jour ainsi que dans la quantité de lit absorbant nécessaire pour effectuer un même traitement. Le réacteur conventionnel à percolation utilisé pour les tests peut traiter 200 litres par mètre carré de surface filtrante par jour pour un volume de lit absorbant de 0,07 $m^3$. Le réacteur utilisé dans la méthode selon la présente invention, tel qu'illustré à la figure 5, peut traiter jusqu'à 1800 litres par mètre carré de surface filtrante par jour pour un volume de lit absorbant de 0.023 $m^3$. Il est alors évident que le réacteur utilisé dans la méthode selon la présente invention, toute proportion conservée, permet de traiter jusqu'à 9 fois plus d'eaux usées qu'un réacteur d'un volume trois fois plus grand, et donc, il est approximativement 27 fois plus efficace que le réacteur à simple percolation. Pour obtenir le même débit dans le réacteur à percolation, il faudrait que le réacteur soit plus gros et donc plus coûteux.

Il va de soi que diverses autres modifications peuvent être apportées à la présente invention sans pour autant sortir du cadre de celle-ci telle que définie dans les revendications annexées.

## Revendications

1. Une méthode pour le traitement d'un liquide dans un réacteur (2) comprenant une enceinte (4) pourvue d'une partie supérieure et d'une partie inférieure entre lesquelles se trouve disposé un lit absorbant (12) dans lequel le liquide se trouve traiter, ladite méthode comprenant:

   - l'introduction à intervalle régulier d'un volume donné de liquide à traiter dans l'enceinte (4) au niveau (10) de la partie supérieure de celle-ci; et
   - l'évacuation du liquide traité hors de l'enceinte (4) au niveau (12) de la partie inférieure de celle-ci; caractérisée en ce que:
   - on utilise comme lit absorbant (6) une garniture poreuse capable d'absorber par capillarité le liquide introduit dans l'enceinte (4) en vue de le traiter, ladite garniture ayant une hauteur de remontée capillaire prédéterminée $h_s$ qui est la hauteur à laquelle remonte le liquide à traiter par effet de capillarité lorsqu'il est introduit dans un tube (20) rempli d'une couche constitué de ladite garniture; et
   - on dispose dans l'enceinte (4) au moins un élément séparateur (8) en vue de diviser horizontalement le lit absorbant en au moins deux couches superposées (18) d'une même hauteur donnée qui est égale ou inférieure à la hauteur de remontée capillaire $h_s$ de la garniture poreuse, le ou lesdits séparateur(s) (8) étant choisi(s) de façon à être perméables au liquide à traiter tout en causant au moins un bris de capillarité dans l'enceinte (4).

2. Méthode selon la revendication 1, caractérisée en ce que la garniture poreuse utilisée comme lit absorbant (12) est de type non réactif et est choisie dans le groupe constitué par la mousse de polyuréthanne, la mousse de polypropylène, la fibre de verre, la tourbe, la pierre volcanique, le papier, la céramique poreuse, les tissus de fibres naturelles ou synthétiques et les non tissés de fibres sysnthétiques.

3. Méthode selon la revendications 1, caractérisée en ce que la garniture poreuse utilisée comme lit absorbant (12) est de type réactif et est choisie dans le groupe constitué par les fibres métalliques recouvertes d'un catalyseur, le charbon activé, les zéolites, les non tissés pourvus de bactéries immobilisées dans leur structure, les gels de polyacrylamide ou d'alginate contenant des enzymes ou des anticorps et les fibres naturelles ou synthétiques ayant des anticorps greffés à leurs surfaces.

4. Méthode selon l'une quelconque des revendications 1 à 3, caractérisée en ce que le ou les éléments séparateurs (8) est ou sont constitués d'une grille dont les mailles définissent des ouvertures de taille suffisamment petite pour créer un bris de contact hydraulique et, de là, le bris de capillarité recherché.

5. Méthode selon l'une quelconque des revendications 1 à 4, caractérisée en ce que l'on procède à un nombre d'injection $n_{inj}$, le lit absorbant disposé dans l'enceinte a un volume V et une masse M, le réacteur a une surface S et on utilise un nombre ns de séparateur(s), et en ce que l'on sélectionne lesdits $n_{inj}$, $V_r$, V, M, S et ns en fonction du volume D de liquide à traiter pendant un temps de traitement $t_d$, du temps de résidence $t_{res}$ requis pour obtenir

un traitement voulu, du temps $t_{inj}$ de chargement du réacteur, de la hauteur $h_s$ de la remontée capillaire, de la hauteur $h_t$ du lit absorbant dans le réacteur et du rapport R de la masse du lit absorbant saturé de liquide à traiter à la masse de ce même lit sec présentant une densité apparente $d_{app}$, en utilisant les équations suivantes:

$$n_{inj} = \frac{t_d}{(t_{res} + t_{inj})} \qquad (4)$$

dans laquelle $n_{inj}$, $t_d$, $t_{res}$ et $t_{inj}$ sont définis comme précédemment;

$$V_r = \frac{D}{n_{inj}} \qquad (5)$$

dans laquelle $V_r$, d et $n_{inj}$ sont définis comme précédemment;

$$V = \frac{V_r . d_l}{(R-1) . d_{app}} \qquad (6)$$

dans laquelle $d_1$ est la densité du liquide à traiter, V, $V_r$, R et $d_{app}$ sont définis comme précédemment;

$$M = V . d_{app} \qquad (7)$$

dans laquelle M, V et $d_{app}$ sont définis comme précédemment;

$$S = \frac{V}{h_t} \qquad (8)$$

dans laquelle S, V et $h_t$ sont définis comme précédemment; et

$$n_s = \frac{h_t}{h_s} - 1 \qquad (10)$$

dans laquelle $n_s$, $h_t$ et $h_s$ sont définis comme précédemment et où le nombre $n_s$ est arrondi à l'entier supérieur immédiat.

**6.** Méthode selon l'une quelconque des revendications 1 à 4, caractérisée en ce que l'on procède à un nombre d'injection $n_{inj}$, liquide contenu dans l'enceinte a un volume $V_r$, absorbant disposé dans l'enceinte à un volume V et une masse M, le lit absorbant disposé dans l'enceinte a une hauteur $h_t$ et on utilise un nombre $n_s$ de séparateur (s), et en ce que l'on sélectionne lesdits $n_{inj}$, $V_r$, V, M, $h_t$ et $n_s$ en fonction du volume D de liquide à traiter pendant le temps $t_d$ de traitement, du temps de résidence $t_{res}$ requis pour obtenir un traitement voulu, du temps $t_{inj}$ de chargement du réacteur, de la hauteur $h_s$ de la remontée capillaire, de la surface S du réacteur et du rapport R de la masse du lit absorbant saturé de liquide à traiter à la masse de ce même lit sec présentant une densité apparente $d_{app}$, en utilisant les équations suivantes:

$$n_{inj} = \frac{t_d}{(t_{res} + t_{inj})} \qquad (4)$$

dans laquelle $n_{inj}$, $t_d$, $t_{res}$ et $t_{inj}$ sont définis comme précédemment;

$$V_r = \frac{D}{n_{inj}} \tag{5}$$

dans laquelle $V_r$, d et $n_{inj}$ sont définis comme précédemment;

$$V = \frac{V_r.d_l}{(R\text{-}1).d_{app}} \tag{6}$$

dans laquelle $d_1$ est la densité du liquide à traiter, V, $V_r$, R et $d_{app}$ sont définis comme précédemment;

$$M = V.d_{app} \tag{7}$$

dans laquelle M, V et $d_{app}$ sont définis comme précédemment;

$$h_t = \frac{V}{S} \tag{9}$$

dans laquelle S, V et $h_t$ sont définis comme précédemment;

$$n_s = \frac{h_t}{h_s}\text{-}1 \tag{10}$$

dans laquelle $n_s$, $h_t$ et $h_s$ sont définis comme précédemment et où le nombre $n_s$ est arrondi à l'entier supérieur immédiat.

7. Méthode selon l'une quelconque des revendications 1 à 6, caractérisée en ce que ledit réacteur (2) comprend en outre une entrée (50) disposée dans la partie supérieure de l'enceinte pour introduire un gaz.

8. Méthode selon la revendication 7, caractérisé en ce que le gaz introduit est de l'air.

9. Méthod selon l'une quelconque des revendications 1 à 8, caractérisée en ce que le liquide à traiter consiste en des eaux usées.

**Patentansprüche**

1. Verfahren zur Behandlung einer Flüssigkeit in einem Reaktor (2), der eine Kammer (4) umfaßt, die mit einem oberen Abschnitt und einem unteren Abschnitt versehen ist, zwischen denen ein Saugbett (12), in welchem die Flüssigkeit behandelt wird, angeordnet ist, wobei das Verfahren umfaßt:

   - Einleiten eines bestimmten Volumens der zu behandelnden Flüssigkeit in regelmäßigen Intervallen in die Kammer (4) auf Höhe (10) ihres oberen Abschnitts; und
   - Entfernen der behandelten Flüssigkeit aus der Kammer (4) auf Höhe (12) ihres unteren Abschnittes;

   dadurch gekennzeichnet, daß:

   - man als Saugbett (6) eine poröse Packung verwendet, die durch Kapillarität die in die Kammer (4) zur Behandlung eingeleitete Flüssigkeit absorbieren kann, wobei die Packung eine bestimmte kapillare Steighöhe $h_s$ besitzt, welche der Höhe entspricht, auf welche die zu behandelnde Flüssigkeit durch Kapillareffekte ansteigt, wenn sie in ein Rohr (20) eingeleitet wird, das mit einer aus der Packung bestehenden Schicht gefüllt ist; und
   - man in der Kammer (4) wenigstene ein Trennglied (8) anordnet, um das Saugbett horizontal in wenigstens zwei übereinanderliegende Schichten (18) mit gleicher, vorgegebener Höhe zu teilen, die gleich wie oder kleiner als die kapillare Steighöhe $h_s$ der porösen Packung ist, wobei das oder die Trennglied(er) (8) so ausgewählt ist (sind), daß es (sie) für die zu behandelnde Flüssigkeit permeabel ist (sind), dabei aber wenigstens eine Unterbrechung der Kapillarität in der Kammer (4) bewirkt (bewirken).

2. Verfahren gemäß Anspruch 1, dadurch gekennzeichnet, daß die als Saugbett (12) verwendete poröse Packung nicht reaktiv ist und ausgewählt ist aus der Gruppe bestehend aus Polyurethanschaum, Polypropylenschaum, Glasfasern, Torfmoor, vulkanischem Gestein, Papier, poröser Keramik, Geweben aus natürlichen oder synthetischen Fasern und ungewebten synthetischen Fasern.

3. Verfahren gemäß Anspruch 1, dadurch gekennzeichnet, daß die als Saugbett (12) verwendete poröse Packung reaktiv ist und ausgewählt ist aus der Gruppe bestehend aus mit einem Katalysatormaterial beschichteten Metallfasern, Aktivkohle, Zeoliten, ungewebten Stoffen, die in ihrer Struktur immobilisierte Bakterien enthalten, Enzyme oder Antikörper enthaltenden Polyacrylamid- oder Alginatgelen und natürlichen oder synthetischen Fasern mit auf ihrer Oberfläche eingepflanzten Antikörpern.

4. Verfahren gemäß einem der Anaprüche 1 bis 3, dadurch gekennzeichnet, daß das oder die Trennglie(er) (8) aus einem Gitter besteht (bestehen), dessen (deren) Maschen Öffnungen mit ausreichend kleinen Abmessungen definieren, um eine Unterbrechung des hydraulischen Kontaktes und folglich die gewünschte Unterbrechung der Kapillarität zu erzeugen.

5. Verfahren gemäß einem der Ansprüche 1 bis 4, dadurch gekennzeichnet, daß man es durchführt mit einer Anzahl an Injektionen $n_{inj}$, einem in der Kammer angeordneten Saugbett mit Volumen V und Masse M, einer Oberfläche S des Reaktors, wobei man eine Anzahl $n_s$ Trennglieder verwendet, und daß man die $n_{inj}$, $V_r$, V, M, S und $n_s$ als Punktion des Volumens D der während einer Behandlungszeit $t_d$ zu behandelnden Flüssigkeit, der zum Erreichen der gewünschten Behandlung erforderlichen Verweilzeit $t_{res}$, der Beladungszeit $t_{inj}$ des Reaktors, der kapillaren Steighöhe $h_s$, der Höhe $h_t$ des Saugbettes im Reaktor und des Verhältnisses R der Masse des mit zu behandelnder Flüssigkeit gesättigten Saugbettes zur Masse desselben Bettes im trockenen Zustand, welches eine scheinbare Dichte $d_{app}$ aufweist, unter Verwendung der folgenden Gleichungen bestimmt:

$$n_{nij} = \frac{t_d}{(t_{res} + t_{inj})} \tag{4}$$

wobei $n_{inj}$, $t_d$, $t_{res}$ und $t_{inj}$ wie vorstehend definiert sind;

$$V_r = \frac{D}{n_{inj}} \tag{5}$$

wobei $V_r$, D und $n_{inj}$ wie vorstehend definiert sind;

$$V = \frac{V_r . d_l}{(R-1) . d_{app}} \tag{6}$$

wobei $d_1$ die Dichte der zu behandelnden Flüssigkeit ist und V, $V_r$, R und $d_{app}$ wie vorstehend definiert sind;

$$M = V . d_{app} \tag{7}$$

wobei M, V und $d_{app}$ wie vorstehend definiert sind;

$$S = \frac{V}{h_t} \tag{8}$$

wobei S, V und $h_t$ wie vorstehend definiert sind; und

$$n_s = \frac{h_t}{h_s} - 1 \qquad (10)$$

wobei $n_s$, $h_t$ und $h_s$ wie vorstehend definiert sind, und wobei die Anzahl n, auf die nächst größere ganze Zahl gerundet ist.

**6.** Verfahren gemäß einem der Ansprüche 1 bis 4, dadurch gekennzeichnet, daß man es durchführt mit einer Anzahl an Injektionen $n_{inj}$, einem in der Kammer enthaltenen Flüssigkeitsvolumen $V_r$, einem in der Kammer angeordneten Saugmaterial mit Volumen V und Masse M, wobei das in der Kammer angeordnete Saugbett eine Höhe $h_t$ besitzt und man eine Anzahl $n_s$ Trennglieder verwendet, und daß man die $n_{inj}$, $V_r$, V, M, $h_t$ und $n_s$ als Funktion des Volumens D der während einer Behandlungszeit $t_d$ zu behandelnden Flüssigkeit, der zum Erreichen der gewünschten Behandlung erforderlichen Verweilzeit $t_{res}$, der Beladungszeit $t_{inj}$ des Reaktors, der kapillaren Steighöhe $h_s$, der Oberfläche S des Reaktors und des Verhältnisses R der Masse des mit zu behandelnder Flüssigkeit gesättigten Saugbettes zur Masse desselben Bettes im trockenen Zustand, welches eine scheinbare Dichte $d_{app}$ aufweist, unter Verwendung der folgenden Gleichungen bestimmt:

$$n_{nij} = \frac{t_d}{(t_{res} + t_{inj})} \qquad (4)$$

wobei $n_{inj}$, $t_d$, $t_{res}$ und $t_{inj}$ wie vorstehend definiert sind;

$$V_r = \frac{D}{n_{inj}} \qquad (5)$$

wobei $V_r$, D und $n_{inj}$ wie vorstehend definiert sind;

$$V = \frac{V_r \cdot d_l}{(R-1) \cdot d_{app}} \qquad (6)$$

wobei $d_l$ die Dichte der zu behandelnden Flüssigkeit ist und V, $V_r$, R und $d_{app}$ wie vorstehend definiert sind;

$$M = V \cdot d_{app} \qquad (7)$$

wobei M, V und $d_{app}$ wie vorstehend definiert sind;

$$h_t = \frac{V}{S} \qquad (9)$$

wobei S, V und $h_t$ wie vorstehend definiert sind; und

$$n_s = \frac{h_t}{h_s} - 1 \qquad (10)$$

wobei $n_s$, $h_t$ und $h_s$ wie vorstehend definiert sind, und wobei die Anzahl $n_s$ auf die nächst größere ganze Zahl gerundet ist.

**7.** Verfahren gemäß einem der Ansprüche 1 bis 6, dadurch gekennzeichnet, daß der Reaktor (2) außerdem einen im oberen Abschnitt der Kammer angeordneten Einlaß (50) zur Einleitung eines Gases aufweist.

**8.** Verfahren gemäß Anspruch 7, dadurch gekennzeichnet, daß das eingeleitete Gas Luft ist.

9. Verfahren gemäß einem der Ansprüche 1 bis 8, dadurch gekennzeichnet, daß die zu behandelnde Flüssigkeit Brauchwasser ist.

**Claims**

1. A method for the treatment of a liquid, in a reactor (2) comprising a chamber (4) having an upper portion and a lower portion between which is located an absorbent bed (12) in which the liquid is treated, said method comprising:

   - injecting at regular interval a given volume of said liquid to be treated within the chamber (4) at the level (10) of the upper portion thereof; and
   - removing the treated liquid from the chamber (4) at the level of the lower portion thereof;

   characterised in that:

   - use is made as absorbent bed (6), of a porous packing that is able to absorb by capillarity the liquid injected into the chamber (4) for treatment purpose, said packing having a given capillarity height $h_s$ which is the height that the liquid to be treated reaches by capillarity action when it is fed into a column filled up with a continuous layer of said porous packing; and
   - at least one separation member (8) is mounted within the chamber (4) so as to divide horizontally the absorbent bed into at least two superimposed layers (18) of a same given height that is equal to or lower than the capillarity height $h_s$ of the porous packing, said at least one separation member (8) being selected so as to be permeable to the liquid to be treated and to cause at least one break in capillarity within the chamber (4).

2. The method according to claim 1, characterised in that the porous packing used as absorbent bed (12) is of the non-reactive type and is selected from the group consisting of polyurethane foams, polypreopylene foams, glass fibers, peat moss, volcanic stone, paper, porous ceramics, fabrics of natural and synthetic fibers and synthetic non-woven fabrics.

3. The method according to claim 1, characterised in that the packing used as absorbent bed (12) is of the reactive type and is selected from the group consisting of metallic fibers covered by a catalyst, activated carbon, zeolites, non-woven fabrics having bacteria attached to their fibers, polyacrylamide or alginate gels containing enzymes or antibodies, and natural or synthetic fibers having antibodies grafted thereto.

4. The method according to any one of claims 1 to 3, characterised in that the separation member(s) (8) consist(s) of a grid having mesh openings of a size that is sufficiently small to create a hydraulic contact break and accordingly, the requested break in capillarity.

5. The method according to any one of claims 1 to 4, characterised in that a number $n_{inj}$ of injection is carried out, the absorbent bed placed in the chamber has a volume V and a mass M, the reactor has a surface S and use is made of a number $n_s$ of separation member(s), and in that said $n_{inj}$, $V_r$, V, M, S and $n_s$ are selected as a function of the volume D of liquid to be treated during a treatment period $t_d$, the time of residence $t_{res}$ required to obtain the requested treatment, the time of loading of the reactor $t_{inj}$, the height $h_s$ reached by the liquid by capillary action, the height $h_t$ of the absorbent bed in the reactor and the ratio R of the mass of the absorbent bed saturated with the liquid to be treated to the mass of the same bed in dry form, said dry bed having an apparent density $d_{app}$, by using the following equations:

$$n_{inj} = \frac{t_d}{(t_{res} + t_{inj})} \tag{4}$$

in which $n_{inj}$, $t_d$, $t_{res}$ and $t_{inj}$ are defined as above;

$$V_r = \frac{D}{n_{inj}} \tag{5}$$

in which $V_r$, d and $n_{inj}$ are defined as above;

$$V = \frac{V_r \cdot d_1}{(R-1) \cdot d_{app}} \qquad (6)$$

in which $d_1$ is the density of the liquid to be treated, V, $V_r$, R and $d_{app}$ are defined as above;

$$M = V \cdot d_{app} \qquad (7)$$

in which M, V and $d_{app}$ are defined as above;

$$S = \frac{V}{h_t} \qquad (8)$$

in which S, V and $h_t$ are defined as above; and

$$n_s = \frac{h_t}{h_s} - 1 \qquad (10)$$

in which $n_s$, $h_t$ and $h_s$ are defined as above and wherein the number $n_s$ is rounded to the immediate upper integer.

**6.** Method according to any one of claims 1 to 4, characterised in that a number $n_{inj}$ of injection is carried out, the liquid contained within the chamber has a volume $V_r$, the absorbent bed has a volume V and a mass M, the absorbent bed in the reactor has a height $h_t$ and use is made of a number $n_s$ of separation members, and in that said $n_{inj}$, $V_r$, V, M, ht and $n_s$ are selected as a function of the volume D of liquid to be treated during a treatment period $t_d$, the time of residence $t_{res}$ required to obtain the requested treatment, the time of loading of the reactor $t_{inj}$, the height $h_s$ reached by the liquid by capillary action, the surface S of the reactor and the ration R of the mass of the absorbent bed saturated whith the liquid to be treated to the mass of the same bed in dry form, said dry bed having an apparent density $d_{app}$, by using the following equations:

$$n_{inj} = \frac{t_d}{(t_{res} + t_{inj})} \qquad (4)$$

in which $n_{inj}$, $t_d$, $t_{res}$ and $t_{inj}$ are defined as above;

$$V_r = \frac{D}{n_{inj}} \qquad (5)$$

in which $V_r$, d and $n_{inj}$ are defined as above;

$$V = \frac{V_r \cdot d_1}{(R-1) \cdot d_{app}} \qquad (6)$$

in which $d_1$ is the density of the liquid to be treated, V, $V_r$, R and $d_{app}$ are defined as above;

$$M = V \cdot d_{app} \qquad (7)$$

in which M, V and $d_{app}$ are defined as above;

$$h_t = \frac{V}{S} \qquad (9)$$

in which S, V and $h_t$ are defined as above; and

$$n_s = \frac{h_t}{h_s} - 1 \qquad (10)$$

in which $n_s$, $h_t$ and $h_s$ are defined as above and wherein the number $n_s$ is rounded to the immediate upper integer.

7. The method according to any one of claims 1 to 6, charaterised in that said reactor (2) further comprises an inlet (50) arranged in the upper part of the chamber for supplying a gas.

8. The method according to claim 7, characterised in that the supplied gas is air.

9. The method according to any of claims 1 to 8, characterised in that the liquid to be treated consists in wastewater.

FIG. 1

FIG. 2          FIG. 3

MASSE D'EAU RETENUE PAR CAPILLARITE EN FONCTION DE LA HAUTEUR DU LIT ABSORBANT

DIAMETRE DE LA COLONNE DE 6,5 cm

COLONNE AVEC SEGMENTS SUR 10 cm

COLONNE CONTINUE SANS SEGMENTS

MASSE D'EAU RETENUE EN (g)

HAUTEUR DU LIT EN (cm)

0 cm AU HAUT DE LA COLONNE

FIG. 4

EP 0 885 172 B1

FIG. 5